# EUROPEAN PATENT APPLICATION

(11) **EP 4 239 706 A1**
(43) Date of publication of application: **06.09.2023**
(21) Application number: 22893031.9
(22) Date of filing: 30.09.2022
(51) Int. Cl.: H01M 4/04, H01M 4/62, B05C 5/02, B05C 11/10

(54) **ELECTRODE COATING APPARATUS AND ELECTRODE COATING METHOD**

(30) Priority: 12.11.2021 KR 20210156040
(71) Applicant: LG Energy Solution, Ltd., Seoul 07335 (KR)
(72) Inventor: CHOI, Min-Hyuck, Daejeon 34122 (KR); KIM, Guk-Tae, Daejeon 34122 (KR); KIM, Man-Hyeong, Daejeon 34122 (KR); PARK, Joon-Sun, Daejeon 34122 (KR); LEE, Taek-Soo, Daejeon 34122 (KR); JEON, Shin-Wook, Daejeon 34122 (KR)
(74) Representative: Plasseraud IP
(86) International application number: PCT/KR2022/014854
(87) International publication number: WO 2023/085608

(57) **Abstract**

An electrode coating device and an electrode coating method are disclosed. An electrode coating device according to an embodiment of the present disclosure includes a slot die coater to apply a slurry to a substrate; and an edge adjusting material providing means providing an edge adjusting material to adjust a protrusion formed at an end of the slurry by contacting the slurry.

## Description

### TECHNICAL FIELD

The present application claims priority to Korean Patent Application No. 10-2021-0156040 filed on November 12, 2021 in the Republic of Korea, the disclosures of which are incorporated herein by reference.

The present disclosure relates to an electrode coating device and an electrode coating method, and more specifically, to an electrode coating device and an electrode coating method capable of making the overall thickness of a slurry uniform.

### BACKGROUND ART

As technology development and demand for mobile devices increase, demand for secondary batteries as energy sources is rapidly increasing, and these secondary batteries essentially include electrode assemblies, which are power generation elements.

The electrode assembly has a form in which a positive electrode, a separator, and a negative electrode are stacked at least once, and the electrodes, that is, the positive electrode and the negative electrode, are prepared by coating a positive electrode active material slurry and a negative electrode active material slurry, that is, an electrode slurry, on a current collector made of aluminum foil and copper foil, respectively, and drying.

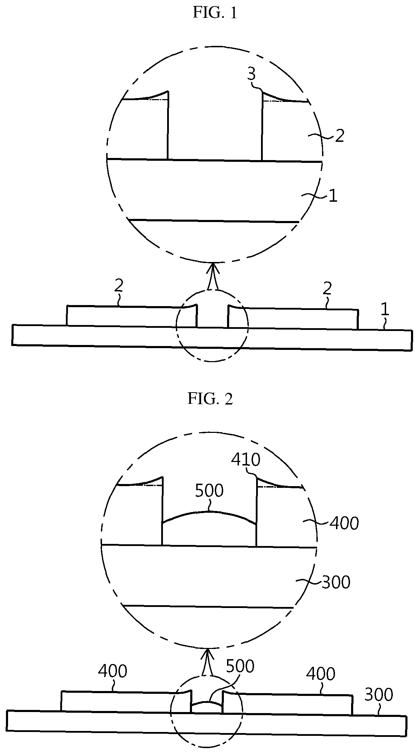

FIG. 1 is a view showing a state in which a slurry is applied to a substrate by a conventional electrode coating device. Here, the substrate is a current collector.

Referring to FIG. 1, when the slurry 2 is applied to the substrate 1, a protrusion 3 is formed at an end of the slurry 2 in an upward direction due to surface tension or the like. When the protrusion 3 is formed at the end of the slurry in this way, non-uniformity occurs in the entire thickness of the slurry, thereby degrading processability in the winding process and lowering the stability of the completed battery cell.

### DISCLOSURE

### Technical Problem

The present disclosure is designed to solve the problems of the related art, and therefore the present disclosure is directed to providing an electrode coating device and an electrode coating method for making the overall thickness of a slurry uniform by removing a protrusion formed at an end of the slurry applied to a substrate.

### Technical Solution

According to one aspect of the present disclosure, there may be provided an electrode coating device including a slot die coater to apply a slurry to a substrate; and an edge adjusting material providing means providing an edge adjusting material to the slurry to adjust a protrusion formed at an end of the slurry by contacting the slurry.

Also, the slurry may be provided in plurality, and the edge adjusting material may be provided between the plurality of slurries.

In addition, the edge adjusting material may be provided to pull the slurry due to a difference in surface tension.

Also, the edge adjusting material may use the same solvent as the slurry, and the surface tension of the edge adjusting material may be provided greater than that of the slurry.

In addition, the edge adjusting material may include a binder-based material having an adhesive force within a predetermined range to prevent deintercalation after drying.

Also, the edge adjusting material may include at least one of polytetrafluoroethylene (PTFE)-based, polyolefin-based, polyimide-based, polyurethane-based, polyester-based, polyvinylidene fluoride (PVDF)-based, styrene butadiene rubber (SBR)-based, ceramic-based, and silicone-based materials.

In addition, the slot die coater may include at least two die blocks; a shim plate provided between the at least two die blocks and forming a slot communicating with the discharge port; and a manifold formed in one or more of the at least two die blocks and accommodating the slurry, and the edge adjusting material providing means may be formed on the shim plate.

Also, the edge adjusting material providing means may be provided in a flow path formed on at least one side of the shim plate, and the edge adjusting material may be discharged to the slurry through the flow path formed on the shim plate.

In addition, the shim plate may include a shim prong, and the flow path may be provided as a straight groove on one side of the shim prong of the shim plate.

Also, the edge adjusting material providing means may be an edge adjusting material coater provided separately from the slot die coater, disposed above or below the slot die coater, and configured to discharge the edge adjusting material toward the substrate.

Meanwhile, according to another aspect of the present disclosure, there may be provided an electrode coating method including a step of applying the slurry to the substrate; and a step of providing the edge adjusting material to adjust the protrusion formed on the edge of the slurry by contacting the slurry to the slurry.

Also, the slurry may be provided in plurality, and the edge adjusting material may include a step of being provided between the plurality of slurries.

### Advantageous Effects

According to embodiments of the present disclosure, the edge adjusting material is provided to the slurry applied to the substrate to remove the protrusion formed at the end of the slurry, resulting in the effect of making the overall thickness of the slurry uniform.

### DESCRIPTION OF DRAWINGS

FIG. 1 is a view showing a state in which a slurry is applied to a substrate by a conventional electrode coating device.
FIGS. 2 and 3 are views showing a process in which an edge adjusting material is provided between slurries by an electrode coating device or an electrode coating method according to an embodiment of the present disclosure to remove protrusions at the ends of the slurry and make the overall thickness of the slurry uniform.
FIG. 4 is a cross-sectional view of an electrode coating device according to an embodiment of the present disclosure.
FIG. 5 is an exploded perspective view of an electrode coating device according to an embodiment of the present disclosure.
FIG. 6 is a front view of the shim plate of FIG. 5.
FIG. 7 is a plan view of the shim plate of FIG. 5.
FIG. 8 is a cross-sectional view of an electrode coating device according to another embodiment of the present disclosure.
FIG. 9 is a cross-sectional view of an electrode coating device according to still another embodiment of the present disclosure.

### BEST MODE

Hereinafter, preferred embodiments of the present disclosure will be described in detail with reference to the accompanying drawings. It should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation. Therefore, the description proposed herein is just a preferable example for the purpose of illustrations only, not intended to limit the scope of the present disclosure, so it should be understood that other equivalents and modifications could be made thereto without departing from the scope of the present disclosure.

In the drawings, the size of each component or a specific portion constituting the component is exaggerated, omitted, or schematically illustrated for convenience and clarity of description. Therefore, the size of each component does not fully reflect the actual size. If it is determined that a detailed description of a related known function or configuration may unnecessarily obscure the gist of the present disclosure, such a description will be omitted.

As used herein, the term 'coupling' or 'connection' refers to not only a case where one member and another member are directly coupled or directly connected, but also a case where one member is indirectly coupled or indirectly connected to another member through a joint member.

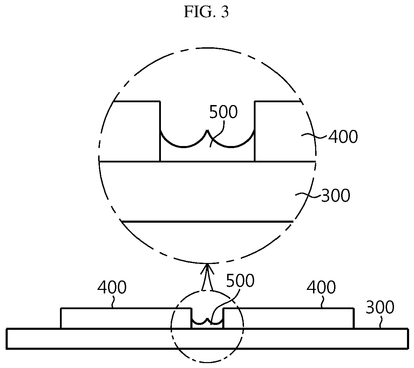

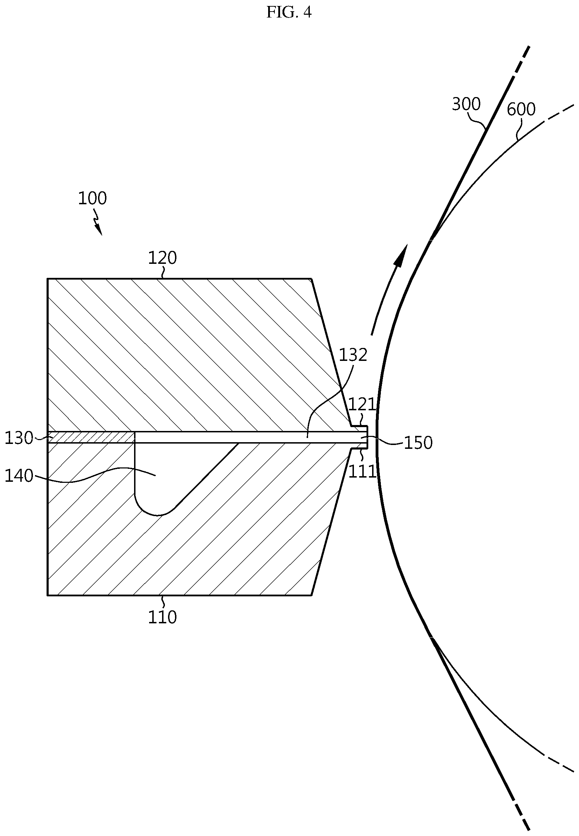

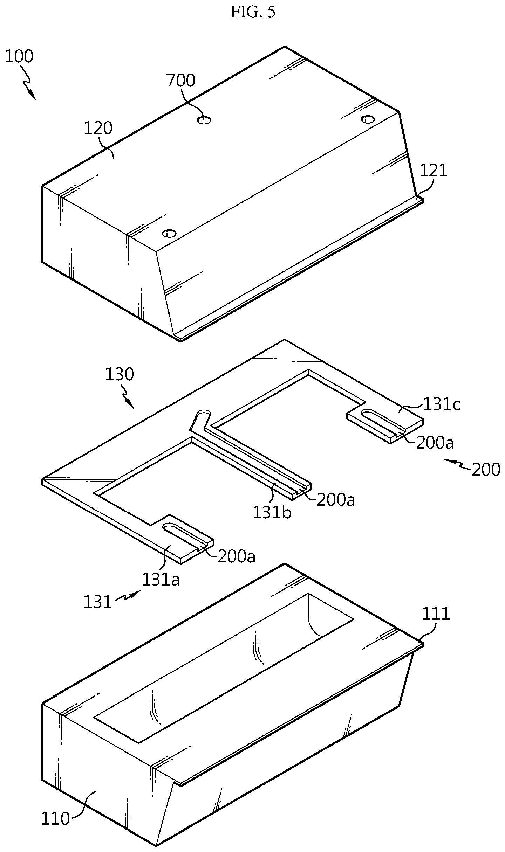

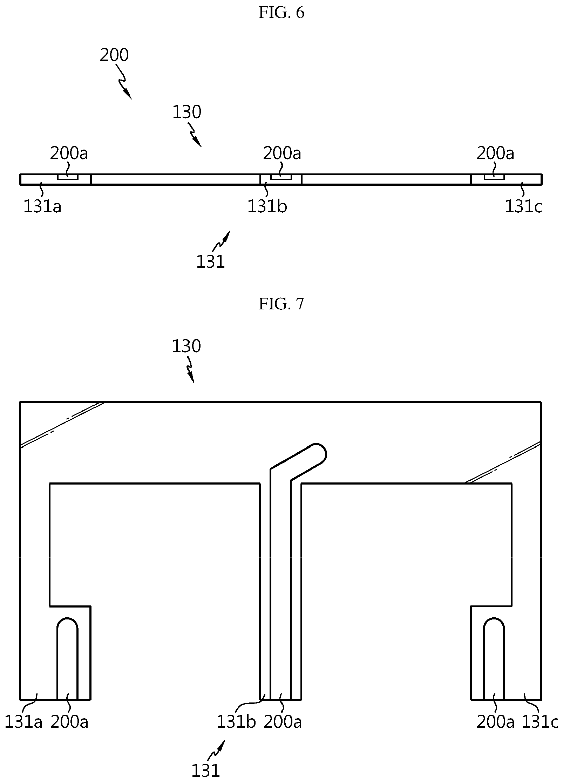

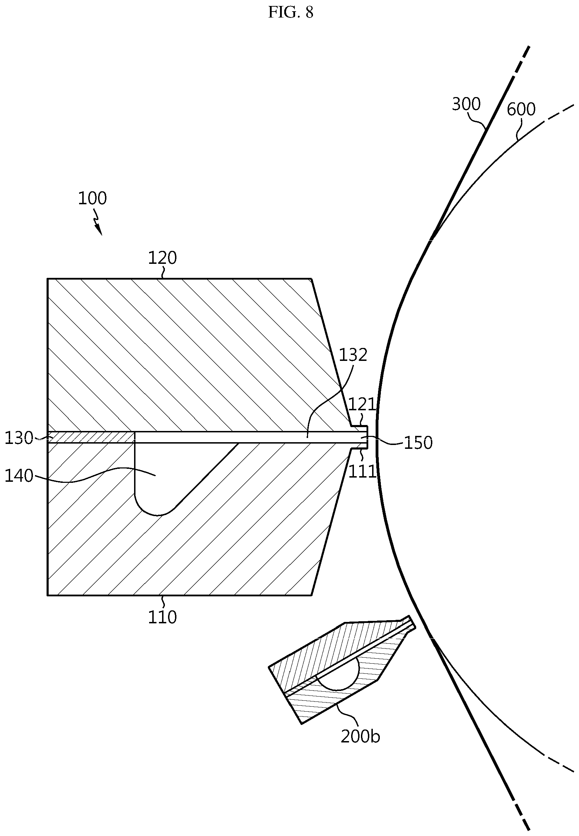

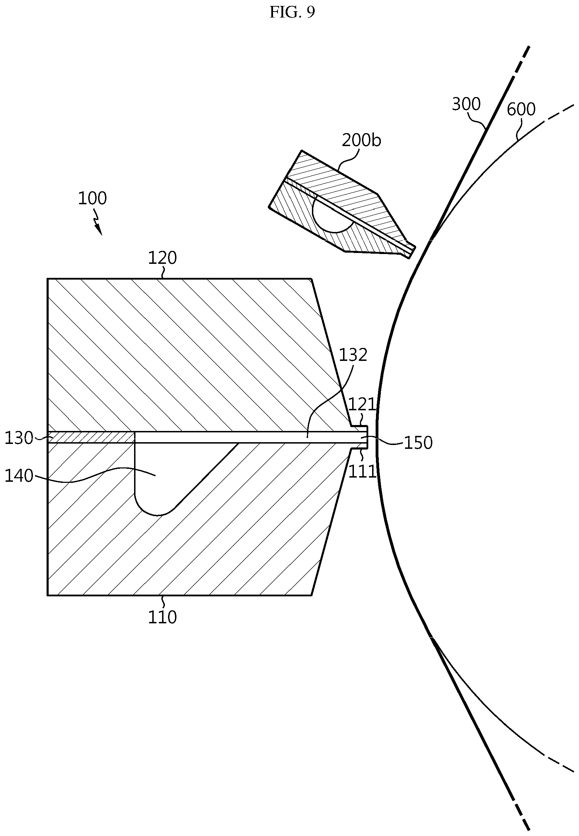

FIGS. 2 and 3 are views showing a process in which an edge adjusting material is provided between slurries by an electrode coating device or an electrode coating method according to an embodiment of the present disclosure to remove protrusions at the ends of the slurry and make the overall thickness of the slurry uniform, FIG. 4 is a cross-sectional view of an electrode coating device according to an embodiment of the present disclosure, FIG. 5 is an exploded perspective view of an electrode coating device according to an embodiment of the present disclosure, FIG. 6 is a front view of the shim plate of FIG. 5, Fig. 7 is a plan view of the shim plate of FIG. 5, FIG. 8 is a cross-sectional view of an electrode coating device according to another embodiment of the present disclosure, and FIG. 9 is a cross-sectional view of an electrode coating device according to still another embodiment of the present disclosure.

In the present specification, the substrate 300 is a current collector, and the slurry 400 means an electrode active material slurry.

Referring to the drawings, an electrode coating device according to an embodiment of the present disclosure includes a slot die coater 100 and an edge adjusting material providing means 200.

The slot die coater 100 is provided to discharge and apply the slurry 400 onto the substrate 300 through the discharge port 150, thereby coating the substrate 300.

Referring to FIGS. 4 and 5, the slot die coater 100 includes die blocks 110, 120, a shim plate 130, and a manifold 140.

There may be two or more die blocks 110, 120, and as shown in FIGS. 4 and 5, two of a lower die block 110 and an upper die block 120 may be provided.

A shim plate 130 is provided between the lower die block 110 and the upper die block 120, thereby forming a slot 132. That is, the slot 132 is formed between the lower die block 110 and the upper die block 120 facing each other, the shim plate 130 is interposed between the lower die block 110 and the upper die block 120 to provide a gap between them, thereby forming a slot 132 corresponding to a passage through which the slurry 400 may flow.

The lower die block 110 is disposed below, and the upper die block 120 is disposed above the lower die block 110. In the lower die block 110 and the upper die block 120, the discharge port 150 is installed in a direction toward the substrate 300 so that the slurry 400 may be discharged toward the substrate 300. In addition, any one of the die blocks 110, 120 is provided with a manifold 140 having a predetermined depth and communicating with the slot 132.

A rotatable coating roll 600 is disposed in front of the lower die block 110 and the upper die block 120, and when the substrate 300 moves along the coating roll 600 during the rotation of the coating roll 600, the slurry 400 is applied to the substrate 300 through the discharge port 150 between the lower die block 110 and the upper die block 120, and the substrate 300 is coated.

The shim plate 130 is provided between at least two die blocks 110, 120, for example, between the lower die block 110 and the upper die block 120, and forms the slot 132 communicating with the discharge port 150.

Here, the discharge port 150 through which the slurry 400 is discharged to the outside is formed between the lower die lip 111, which is the front end of the lower die block 110 and the upper die lip 121, which is the front end of the upper die block 120. The discharge port 150 may be formed to be spaced apart from each other between the die lips.

In addition, the shim plate 130 may be made of a material having sealing properties so as to double as a gasket that prevents the slurry 400 from leaking into the gap between the lower die block 110 and the upper die block 120, except for the area where the discharge port 150 is formed.

Here, an edge adjusting material providing means 200 to be described later may be formed on the shim plate 130.

The manifold 140 is formed in one or more of the at least two die blocks 110, 120 and is provided to accommodate the slurry 400. That is, the manifold 140 may be formed in the lower die block 110 or in the upper die block 120.

The manifold 140 is connected to a supply chamber (not shown) and a supply pipe (not shown) installed outside installed outside to receive the slurry 400. When the manifold 140 is filled with the slurry 400, the flow of the slurry 400 is induced along the slot 132 and discharged to the outside through the discharge port 150.

The edge adjusting material providing means 200 provides the edge adjusting material 500 to the slurry 400 so as to adjust the protrusion 410 formed at the end of the slurry 400 by contacting the slurry 400.

Here, the edge adjusting material 500 means a material provided to pull the slurry 400 by a difference in surface tension. For example, the edge adjusting material 500 uses the same solvent as the slurry 400. In addition, the edge adjusting material 500 may include various materials in which the surface tension of the edge adjusting material 500 is provided greater than that of the slurry 400.

The edge adjusting material 500 may include a binder-based material having an adhesive force within a predetermined range in order to prevent deintercalation after drying.

As a specific example, the edge adjusting material 500 may include at least one of polytetrafluoroethylene (PTFE)-based, polyolefin-based, polyimide-based, polyurethane-based, polyester-based, polyvinylidene fluoride (PVDF)-based, styrene butadiene rubber (SBR)-based, ceramic-based, and silicone-based materials.

Referring to FIG. 2, the edge adjusting material 500 is provided between the plurality of slurries 400, and the edge adjusting material 500 is in contact with each end of the plurality of slurries 400.

In addition, referring to FIG. 3, since the surface tension of the edge adjusting material 500 is greater than that of the slurry 400, the force due to the difference in surface tension between the edge adjusting material 500 and the slurry 400 acts to change the edge adjusting material 500 into a W shape, and the protrusions 410 on the upper side of both ends of the slurry 400 are pulled by the edge adjusting material 500 to be removed. And, the overall thickness of the slurry 400 becomes uniform.

Here, various devices for providing the edge adjusting material 500 to the slurry 400 may be used. For example, in one embodiment, the edge adjusting material providing means 200 may be provided as a flow path 200a (refer to FIG. 5) formed on at least one side of the shim plate 130. That is, in the slot die coater 100 providing the slurry 400 to the substrate 300, the edge adjusting material 500 is also provided.

Here, the edge adjusting material 500 may be supplied to the flow path 200a through the through hole 700 formed in the upper die block 120.

In addition, the edge adjusting material 500 may be provided to the slurry 400 through the flow path 200a formed in the shim plate 130. That is, the edge adjusting material 500 may be discharged onto the substrate so as be in contact with the slurry 400.

Referring to FIGS. 5 to 7, the shim plate 130 includes a shim prong 131, and the flow path 200a may be provided as a straight groove at one side of the shim prong 131 of the shim plate 130. Here, the shim prong 131 may be provided at the center 131b and both ends 131a, 131c, and the flow path 200a through which the edge adjusting material 500 moves may be formed at one or more of the center 131b of the shim prong 131 and both ends 131a, 131c of the shim prong 131.

As shown in FIGS. 2 and 3, the slurry 400 may be provided in plurality, and the edge adjusting material 500 may be provided between the plurality of slurries 400. For example, when the edge adjusting material 500 is provided through the center 131b of the shim prong 131 of FIG. 5, it may be provided between the plurality of slurries 400.

However, it is not necessarily limited thereto, and the edge adjusting material 500 may be provided through both ends 131a, 131c of the shim prong 131 of FIG. 5 to contact only one slurry 400.

As described above, the slurry 400 and the edge adjusting material 500 may be provided through one slot die coater 100, or in another embodiment, the slot die coater 100 and the edge adjusting material 500 may be provided separately to provide the slurry 400 and the edge adjusting material 500, respectively.

Referring to FIG. 8, the edge adjusting material providing means 200 may be an edge adjusting material coater 200b, and the edge adjusting material coater 200b is provided separately from the slot die coater 100 to be disposed below the slot die coater 100. Here, the edge adjusting material 500 is discharged toward the substrate 300 prior to the slurry 400.

Referring to FIG. 9, the edge adjusting material providing means 200 may also be an edge adjusting material coater 200b, and the edge adjusting material coater 200b is provided separately from the slot die coater 100 to be disposed above the slot die coater 100. Here, the slurry 400 is first discharged toward the substrate 300, and then the edge adjusting material 500 is discharged toward the substrate 300 so as to contact the slurry 400 later than the slurry 400.

In FIGS. 8 and 9, the edge adjusting material coater 200b has the same principle as the slot die coater 100 for discharging the slurry 400, and thus a detailed description thereof is replaced with the description of the slot die coater 100.

In addition, various other devices may be further included as long as the edge adjusting material 500 may be provided between the slurry 400.

Meanwhile, the edge adjusting material 500 may be naturally cut and removed in the process of manufacturing an electrode. Alternatively, since the edge adjusting material 500 includes a material forming an electrode, it may not be removed.

Hereinafter, the operation and effect of the electrode coating device according to an embodiment of the present disclosure will be described with reference to the drawings.

Referring to FIGS. 5 to 7, the edge adjusting material providing means 200 may be provided as a flow path 200a formed on the shim plate 130 of the slot die coater 100, and is provided to the substrate 300 so that the edge adjusting material 500 is in contact with the slurry 400 through the flow path 200a formed on the shim plate 130.

Meanwhile, referring to FIG. 8 as another embodiment, the edge adjusting material providing means 200 is provided separately from the slot die coater 100 and disposed below the slot die coater 100 to provide the edge adjusting material 500, and referring to FIG. 9 as still another embodiment, the edge adjusting material providing means 200 is provided separately from the slot die coater 100 and disposed above the slot die coater 100 to provide the edge adjusting material 500.

Here, the edge adjusting material 500 provided to the slurry 400 has the same solvent as the slurry 400 but has a surface tension greater than that of the slurry 400, so it is in contact with the slurry 400 and pulls the slurry 400, thereby removing the protrusion 410 formed at the end of the slurry 400 to make the entire thickness of the slurry 400 uniform.

Hereinafter, the operation and effect of the electrode coating method according to an embodiment of the present disclosure will be described with reference to the drawings. However, a description common to the parts described above in the electrode coating device according to an embodiment of the present disclosure is replaced with the above description.

In addition, among the contents described in the electrode coating method according to an embodiment of the present disclosure, the contents that may be applied to the electrode coating device according to the above-described embodiment of the present disclosure are also applied to the electrode coating device according to an embodiment of the present disclosure described above.

The method of providing the edge adjusting material 500 to the slurry 400 may be various. A device may be used, or a user may directly provide the edge adjusting material 500 to the slurry 400.

The slurry 400 is applied to the substrate 300 of the electrode coating method, and the edge adjusting material 500 that adjusts the protrusion 410 formed on the edge of the slurry 400 by contacting the slurry 400 is provided to the slurry 400. Here, the order of application of the slurry 400 and the edge adjusting material 500 is irrelevant. That is, after discharging the slurry 400 to the substrate 300 first, the edge adjusting material 500 may be provided to the substrate 300 so that the edge adjusting material 500 is in contact with the slurry 400, or after providing the edge adjusting material 500 to the substrate 300 first, the slurry 400 may be discharged onto the substrate 300 so that the slurry 400 is in contact with the edge adjusting material 500, or the slurry 400 and the edge adjusting material 500 may be discharged to the substrate 300 at the same time.

Here, the slurry 400 may be provided in plurality, and the edge adjusting material 500 may be provided between the plurality of slurries 400.

While the present disclosure has been hereinabove described with regard to a limited number of embodiments and drawings, the present disclosure is not limited thereto and it is obvious to those skilled in the art that a variety of modifications and changes may be made thereto within the technical aspects of the present disclosure and the equivalent scope of the appended claims.

### INDUSTRIAL APPLICABILITY

The present disclosure relates to an electrode coating device and an electrode coating method for a secondary battery, and is particularly applicable to industries related to the secondary battery.

## Claims

1. An electrode coating device comprising:
a slot die coater to apply a slurry to a substrate; and
an edge adjusting material providing means providing an edge adjusting material to the slurry to adjust a protrusion formed at an end of the slurry by contacting the slurry.

2. The electrode coating device according to claim 1,
wherein the slurry is provided in plurality, and
the edge adjusting material is provided between the plurality of slurries.

3. The electrode coating device according to claim 2,
wherein the edge adjusting material is provided to pull the slurry due to a difference in surface tension.

4. The electrode coating device according to claim 3,
wherein the edge adjusting material uses the same solvent as the slurry, and the surface tension of the edge adjusting material is provided greater than that of the slurry.

5. The electrode coating device according to claim 4,
wherein the edge adjusting material comprises a binder-based material having an adhesive force within a predetermined range to prevent deintercalation after drying.

6. The electrode coating device according to claim 5,
wherein the edge adjusting material comprises at least one of polytetrafluoroethylene (PTFE)-based, polyolefin-based, polyimide-based, polyurethane-based, polyester-based, polyvinylidene fluoride (PVDF)-based, styrene butadiene rubber (SBR)-based, ceramic-based, and silicone-based materials.

7. The electrode coating device according to claim 1,
wherein the slot die coater comprises:
at least two die blocks;
a shim plate provided between the at least two die blocks and forming a slot communicating with the discharge port; and
a manifold formed in one or more of the at least two die blocks and accommodating the slurry, and
the edge adjusting material providing means is formed on the shim plate.

8. The electrode coating device according to claim 7,
wherein the edge adjusting material providing means is provided in a flow path formed on at least one side of the shim plate, and
the edge adjusting material is discharged to the slurry through the flow path formed on the shim plate.

9. The electrode coating device according to claim 8,
wherein the shim plate includes a shim prong, and
the flow path is provided as a straight groove on one side of the shim prong of the shim plate.

10. The electrode coating device according to claim 1,
wherein the edge adjusting material providing means is an edge adjusting material coater provided separately from the slot die coater, disposed above or below the slot die coater, and configured to discharge the edge adjusting material toward the substrate.

11. An electrode coating method comprising:
a step of applying the slurry to the substrate; and
a step of providing the edge adjusting material to adjust the protrusion formed on the edge of the slurry by contacting the slurry to the slurry.

12. The electrode coating method according to claim 11,
wherein the slurry is provided in plurality, and
the edge adjusting material comprises a step of being provided between the plurality of slurries.
